# EUROPEAN PATENT APPLICATION

(11) **EP 4 674 895 A1**
(43) Date of publication of application: **07.01.2026**
(21) Application number: 24763491.8
(22) Date of filing: 01.02.2024
(51) Int. Cl.: C08J 5/18, B32B 7/023, B32B 27/32, B65D 65/40

(54) **SEALANT FILM**

(30) Priority: 27.02.2023 JP 2023028711
(71) Applicant: Toyo Seikan Co., Ltd., Tokyo 141-8640 (JP)
(72) Inventor: YOSHIKAWA, Seishi, Yokohama-shi, Kanagawa 230-0001 (JP); IMODA, Daisuke, Yokohama-shi, Kanagawa 230-0001 (JP); YASUUMI, Takahiro, Yokohama-shi, Kanagawa 230-0001 (JP); HATA, Motohide, Yokohama-shi, Kanagawa 230-0001 (JP)
(74) Representative: J A Kemp LLP
(86) International application number: PCT/JP2024/003314
(87) International publication number: WO 2024/181007

(57) **Abstract**

Provided is a sealant film ensuring thermal adhesiveness and having excellent environmental compatibility while using a recycled polyolefin.

The sealant film includes a polyolefin film containing a recycled polyolefin and is characterized in that the recycled polyolefin contains a polyolefin-incompatible foreign substance in an amount of 1 to 20 mass%, and the foreign substance has a maximum size of 1 to 2000 µm.

## Description

### Technical Field

The present invention relates to a sealant film containing a recycled polyolefin, and further relates to a laminate for packaging and a packaging container, both using the sealant film.

### Background Art

In view of the importance placed on environmental protection in recent years, studies have been conducted on various recycling technologies that recycle and reuse plastic from used plastic molded articles and plastic waste materials generated during the production of molded articles. For example, polyethylene is widely used in various applications, and using recycled polyethylene products in applications, such as films, has been proposed.

For example, Patent Document 1 proposes a method for recovering and recycling a multilayer film, characterized in that a low-molecular-weight polyethylene is blended into scraps of a transparent multilayer film composed of a polyethylene layer, an adhesive layer, and a nylon layer. Patent Document 1 also proposes pelletizing the recovered recycled product and using the pellets to produce a film.

In addition, Patent Document 2 proposes a recycled film having a content of a recycled material (e.g., a recycled polyethylene) of 50 to 90 mass% and a content of a foreign substance of 0.1 to 2 mass% relative to the entire film. Patent Document 2 discloses that this recycled film is formed into a three-layer structure, in which a first layer contains from 50 to 90 mass% of the recycled material, from 0.1 to 2 mass% of the foreign substance, and from 2 to 4 mass% of a pressure-sensitive adhesive, a second layer contains from 50 to 90 mass% of the recycled material and from 0.1 to 2 mass% of the foreign substance, and a third layer is composed of a virgin low-density polyethylene (LDPE).

The actual situation, however, has been that films using a recycled polyolefin as described above cannot be used as sealant films, particularly for making packaging bags. That is, this is because using such a film as a sealant film causes various problems, such as a decrease in thermal adhesiveness due to the use of a recycled material, flavor deterioration due to an odor, poor appearance due to coloration, and a decrease in strength.

### Citation List

### Patent Document

Patent Document 1: JP H03-237143 A
Patent Document 2: JP 2001-122985 A

### Summary of Invention

### Technical Problem

Thus, an object of the present invention is to provide a sealant film ensuring thermal adhesiveness and having environmental compatibility while using a recycled polyolefin.

Another object of the present invention is to provide a sealant film in which problems, such as an odor, coloration, or a decrease in strength, are solved despite of containing a recycled polyolefin.

Yet another object of the present invention is to provide a laminate for packaging and a packaging container, both formed using the above-described sealant film containing a recycled polyolefin.

### Solution to Problem

According to the present invention, there is provided a sealant film including a polyolefin layer containing a recycled polyolefin, characterized in that the polyolefin layer containing the recycled polyolefin contains a polyolefin-incompatible foreign substance in an amount of 1 to 20 mass%, and the foreign substance has a maximum size of 1 to 2000 µm.

In the sealant film of the present invention, the following aspects are suitably employed.
(1) The foreign substance is one or more selected from a gel derived from a recycled polyolefin, a polyester, a polyamide, an adhesive, and a colorant.
(2) Polyolefin layers each not containing the recycled polyolefin are provided on both sides of the polyolefin layer containing the recycled polyolefin.
(3) The polyolefin layer containing the recycled polyolefin further contains a polyolefin-compatible virgin polyolefin.
(4) The recycled polyolefin is a recycled polyethylene, and the polyolefin layer is a polyethylene layer.
(5) At least one of the polyolefin layers each not containing the recycled polyolefin contains a colorant.
(6) The sealant film has a visible light transmittance of 90% or less.
(7) A method for producing a sealant film, wherein the sealant film is formed by cast film production.
(8) A laminate for packaging, the laminate including a substrate film laminated on either one of the polyolefin layers each not containing the recycled polyolefin of the sealant film.
(9) A packaging container including the laminate for packaging.

### Advantageous Effects of Invention

The sealant film according to an embodiment of the present invention is preferably a sealant film in which polyolefin layers each not containing a recycled polyolefin are provided on both sides of a polyolefin layer containing the recycled polyolefin. This can effectively avoid a decrease in adhesiveness (laminating properties, heat sealability) due to the recycled polyolefin. In particular, a laminate for packaging can be obtained by laminating a substrate film on one side of the polyolefin layers each not containing the recycled polyolefin with a solvent-based or nonsolvent-based thermosetting adhesive or an adhesive resin, and a packaging container can be obtained by heat-sealing the other side as an inner layer in such a laminate for packaging.

Furthermore, in the sealant film according to an embodiment of the present invention having the multilayer structure as described above, utilizing this multilayer structure allows the use of an agent that suppresses performance deterioration and the like due to the use of a recycled polyolefin. For example, a deodorizer can be used to avoid flavor deterioration due to an odor, a colorant (formation of a colored layer) can be used to avoid poor appearance due to coloration, and a modifier or the like can be used to avoid a decrease in strength.

In addition, utilizing the substrate film laminated on this sealant film can increase the puncture resistance of a packaging bag and can improve the gas barrier properties by the formation of an inorganic vapor-deposited film and the appearance characteristics by the formation of a printed layer.

### Brief Description of Drawings

FIG. 1 is a schematic cross-sectional side view illustrating a layer structure of a sealant film according to an embodiment of the present invention.
FIG. 2 is a schematic cross-sectional side view illustrating an example of a layer structure of a packaging container formed using the sealant film of FIG. 1.
FIG. 3 is a schematic cross-sectional side view illustrating a layer structure including a colored layer in the sealant film according to an embodiment of the present invention.
FIG. 4 is a schematic cross-sectional side view illustrating an example of a laminate for packaging, the laminate including the layer structure of the sealant film according to an embodiment of the present invention.
FIG. 5 is a schematic cross-sectional side view illustrating an example of a layer structure of a packaging container formed using the laminate for packaging of FIG. 4.

### Description of Embodiments

### Sealant Film

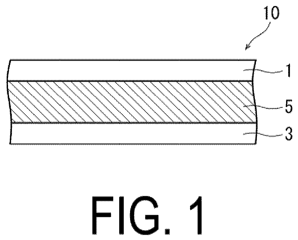

FIG. 1 is a schematic cross-sectional side view illustrating a layer structure in which a sealant film 10 according to an embodiment of the present invention has polyolefin layers 1 and 3 not containing a recycled polyolefin on both sides of a polyolefin layer 5 containing the recycled polyolefin.

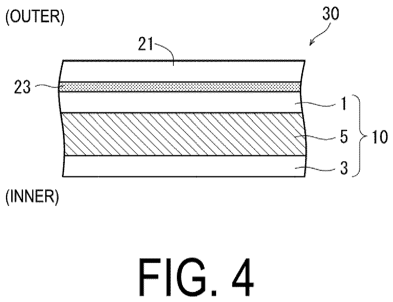

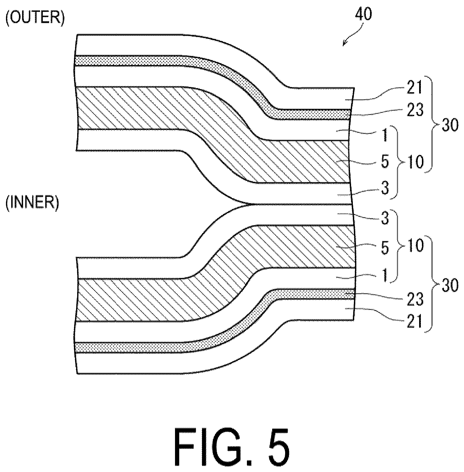

Although not limited to this, the sealant film 10 is basically used as a laminate for packaging by attaching a substrate film described later to the sealant film 10. In a packaging container to be finally obtained, the substrate film side is the outer surface, and the opposite side from the substrate film is the side that comes into contact with the contents contained in the packaging container. Thus, in FIGS. 4 and 5, the side to which the substrate film is attached is described as (OUTER), and the opposite side is described as (INNER).

As can be seen from FIG. 1, in an embodiment of the present invention, a layer 5 containing a recycled polyolefin is sandwiched as an intermediate layer between the two polyolefin layers 1 and 3 not containing the recycled polyolefin. Thus, the sealant film 10 has a layer structure exhibiting excellent heat sealability on both the outer surface side and inner surface side.

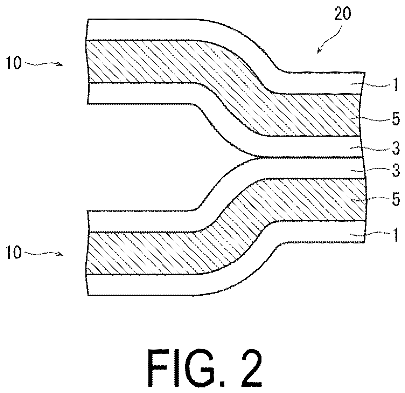

FIG. 2 is a schematic cross-sectional side view illustrating an example of a layer structure of a packaging container 20 in which the sealant films 10 illustrated in FIG. 1 are laminated. This illustrates that the polyolefin layers 3 not containing the recycled polyolefin on the inner sides are heat-sealed.

The polyolefin layers 1 and 3 not containing the recycled polyolefin are produced using a virgin polyolefin. The polyolefin is not particularly limited as long as it has heat sealability, but it is preferred to use a polyethylene selected from a low-density polyethylene (LDPE) or a linear low-density polyethylene (LLDPE), and a polypropylene (PP), and it is more preferred to use the polyethylene. In addition, different polyolefins may be mixed and used, such as mixing and using a low-density polyethylene (LDPE) and a linear low-density polyethylene (LLDPE). Furthermore, the polyolefin may be derived from a petroleum raw material, a plant raw material, or a mixture of these.

In addition, the recycled polyolefin contained in the polyolefin layer 5 as an intermediate layer is recovered from a used polyolefin molded article; a used polyolefin laminate containing polyester, polyamide, an adhesive, and a colorant; or a waste material in the production of a polyolefin molded article or a polyolefin laminate, and is what is called a material-recycled polyolefin obtained through various processes, such as pulverization, washing with an alkali or the like, filtration in a molten state, and extraction with an organic solvent. Thus, in relation to undergoing such processes, the recycled polyolefin contains a polyolefin-incompatible foreign substance. Here, the recycled polyolefin is preferably a polyolefin recovered from a waste material in the production of a polyolefin molded article and more preferably a polyolefin recovered from a waste material in the production of a laminate film.

The polyolefin layer containing a recycled polyolefin contains an incompatible foreign substance in an amount 1 to 20 mass%, and the foreign substance has a maximum size of 1 to 2000 µm. The content of the foreign substance is preferably from 1 to 15 mass% and more preferably from 1 to 10 mass%. The foreign substance refers to a polyester, a polyamide, an adhesive, or the like. It is particularly preferred that the amount of a foreign substance derived from a resin, such as polyester or polyamide, which accounts for the majority as an incompatible foreign substance, be less than 10 mass%. Setting the content of the foreign substance to less than 1 mass% would make it difficult to resolve the object of achieving excellent environmental compatibility. Containing the foreign substance in an amount more than 20 mass% would cause perforation at the time of forming the polyolefin layer containing a recycled polyolefin and cause a decrease in thermal adhesiveness, a decrease in strength, and the like, reducing the quality of the sealant film. Furthermore, setting the maximum size of the foreign substance to less than 1 µm may impose an excessive burden on the process of pulverizing the foreign substance to such a size, and the like. The foreign substance having a maximum size of more than 2000 µm would cause unevenness on the film surface and deteriorate flatness, and be likely to cause the perforation, thus reducing the quality of the sealant film. Here, the maximum size of the foreign substance means the major axis length for a foreign substance having an elliptical shape and means the maximum length among diagonal lines for a foreign substance having a polygonal shape.

The polyolefin-incompatible foreign substance includes all incompatible foreign substances contained in the polyolefin molded article. The foreign substance is preferably a resin and more preferably one or more selected from a gel derived from a recycled polyolefin, polyester, polyamide, and an adhesive. Here, the gel derived from a recycled polyolefin means a material that is formed by solidification of a recycled polyolefin by cross-linking or the like, does not melt by heating, and becomes incompatible.

In an embodiment of the present invention, the polyolefin layer 5 as the intermediate layer contains a recycled polyolefin. Thus, the sealant film 10 as well as a laminate for packaging and a packaging container made of the sealant film 10 have excellent environmental compatibility. However, using a large amount of a recycled polyolefin than necessary would reduce the amount of a virgin polyolefin used accordingly, thus significantly deteriorating the heat sealability and other physical properties. Thus, from the viewpoint of avoiding such a physical property deterioration, the recycled polyolefin content in the sealant film 10 is preferably from 15 to 90 mass% and more preferably from 15 to 60 mass%.

In addition, in terms of more reliably avoiding a decrease in adhesiveness, particularly heat sealability, the thickness of each of the outer polyolefin layers 1 and 3 is preferably set to approximately 10 to 60 µm (to 10 to 60% relative to the thickness of the film 5) when the thickness of the polyolefin layer 5 as the intermediate layer is 100 µm.

Furthermore, the polyolefin layer 5 as the intermediate layer may be formed of the recycled polyolefin alone but usually preferably contains a virgin polyolefin as well. This is because the sealant film 10 is formed by co-extrusion molding using pellets containing such a recycled polyolefin and virgin polyolefin pellets. For example, the polyolefin layer 5 as the intermediate layer is preferably blended with a virgin polyolefin within a range satisfying the recycled polyolefin content and thickness ratio to the outer polyolefin layers 1 and 3 described above. Specifically, under the condition that the recycled polyolefin content and thickness ratio described above are satisfied, the mass ratio of the recycled polyolefin to the virgin polyolefin in the polyolefin layer 5 as the intermediate layer is preferably within a range of recycled polyolefin:virgin polyolefin = from 95:5 to 25:75. Here, for a ratio of 50:50, the dilution is twofold, and for a ratio of 25:75, the dilution is four-fold. In addition, the polyolefin constituting the polyolefin layer 5 as the intermediate layer may be derived from a petroleum raw material, a plant raw material, or a mixture of these.

In the sealant film 10 according to an embodiment of the present invention having the layer structure described above, each layer is preferably blended, for example, with a deodorizer, an antioxidant, a colorant, a modifier, or the like.

The deodorizer captures an offensive odor of the recycled polyolefin and prevents flavor deterioration of the contents due to the offensive odor. The deodorizer may be blended into any of the outer polyolefin layers 1 and 3 as well as the polyolefin layer 5 as the intermediate layer. However, from the viewpoint of using to capture the offensive odor due to the recycled polyolefin and prevent flavor deterioration of the contents due to the offensive odor, the deodorizer is preferably blended into the polyolefin layer 5 as the intermediate layer or a film corresponding to an inner polyolefin layer 3 in FIGS. 4 and 5 described later.

Representative examples of such a deodorizer include silica-based particles, such as silica gel; and aluminum silicate-based particles, such as zeolite. However, because of high dispersibility in a resin and high deodorizing performance, the deodorizer is preferably an MFI-type zeolite and particularly preferably a silica-rich MFI-type zeolite with a silica-alumina molar ratio (SiO₂/Al₂O₃ ratio) of 80 or more. Such a deodorizer is usually preferably used in an amount of 1 to 30 parts by mass per 100 parts by mass of the recycled polyolefin.

Representative examples of the antioxidant include hindered phenols and hindered amines, which have been used as resin additives in the art. Such an antioxidant is used together with a recycled polyolefin in the polyolefin layer 5 as the intermediate layer particularly to prevent further deterioration due to oxidation of the recycled polyolefin and is usually preferably used in an amount of 0.1 to 0.3 parts by mass per 100 parts by mass of the recycled polyolefin.

The colorant is used for the purpose of concealing coloration due to the recycled polyolefin, a printed layer of a packaging container, a printed base layer, or the like, and either a pigment or a dye may be used, but a pigment is preferably used because of excellent weather resistance and durability. The type of coloration is not particularly limited as long as the above objects are achieved, but a white pigment is preferred in view of a printed base layer of a packaging container. Representative examples of the white pigment include titanium oxide, zinc oxide, and calcium carbonate. The colorant is contained in at least one of the outer polyolefin layers 1 or 3. In addition, for the coloration density, the colorant is used in an appropriate amount in view of concealing the coloration described above, but the visible light transmittance at 380 to 800 nm is preferably adjusted to 90% or less and more preferably adjusted to 60% or less.

Furthermore, the modifier is used to prevent a decrease in strength due to a decrease in molecular weight of the recycled polyolefin and is usually blended into the polyolefin layer 5 as the intermediate layer in which the recycled polyolefin is present. For such a modifier, a thermoplastic elastomer is suitably used. That is, a thermoplastic elastomer is used to impart elasticity to the polyolefin layer 5 as the intermediate layer to improve impact resistance. Examples of such a thermoplastic elastomer include an ethylene-α-olefin copolymer, an ethylene-propylene copolymer (EPR), a styrene-butadiene copolymer (SBR), and an ethylene-propylene-butene copolymer (EPBR). In particular, an ethylene-α-olefin copolymer is suitable in terms of excellent dispersibility in polyolefin.

In addition, the modifier is preferably blended into the polyolefin layer 5 as the intermediate layer in an amount of 1 to 30 parts by mass per 100 parts by mass of the recycled polyolefin.

Moreover, the recycled polyolefin contains the polyester, polyamide, adhesive, and colorant described above, and thus to prevent a decrease in strength due to a decrease in molecular weights of these components and the like, an ester decomposition inhibitor, such as a carbodiimide compound, and a compatibilizer for improving dispersibility may be contained. Examples of the polar group of the compatibilizer include an organic isocyanate group, a carboxylic anhydride group, a carboxylic acid group, an amino group, a hydroxy group, an epoxy group, and an acrylic ester group, and an acid-modified olefin-based resin, an imine-modified olefin-based resin, or an acrylic ester-glycidyl methacrylate copolymerized olefin-based resin is suitable.

In addition, a lubricant, an ultraviolet absorber, a plasticizer, a crystal nucleating agent, a filler, a hydrolysis inhibitor, a flame retardant, an antistatic agent, an antifogging agent, or an anti-blocking agent may be blended as long as the physical properties are not impaired.

The sealant film 10 according to an embodiment of the present invention can adopt various aspects under the condition that it has the basic three-layer structure described above. For example, blending a colorant into the outer polyolefin layer 1 in FIG. 2 to form a colored layer can conceal coloration due to the recycled polyolefin so that the coloration is invisible from the outside. Meanwhile, blending a deodorizer into the inner polyolefin layer 3 to capture the odor derived from the recycled polyolefin can prevent flavor deterioration of the contents in a packaging container.

In addition, the colored layer or the layer blended with a deodorizer can be provided as an independent layer.

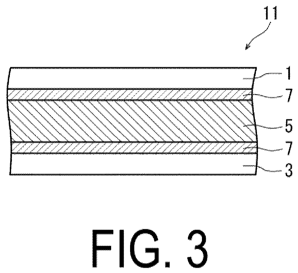

FIG. 3 is a schematic cross-sectional side view illustrating a five-layer structure of a sealant film 11 in which colored layers 7 are each provided as independent layers between the polyolefin layer 5 and the polyolefin layers 1 and 3 of the sealant film 10 illustrated in FIG. 1, the polyolefin layer 5 containing a recycled polyolefin and the polyolefin layers 1 and 3 not containing the recycled polyolefin. In the colored layers 7, a virgin polyolefin is blended with a colorant. Also in the sealant film 11 with such a five-layer structure, the content of the recycled polyolefin is desired to be kept within the range described above (from 15 to 90 mass%) in the same manner as in the sealant film 10.

The thickness of the sealant film 10 according to an embodiment of the present invention described above is not particularly limited but is usually preferably in a range approximately of 50 to 200 µm in view of the rigidity when the sealant film 10 is turned into a packaging container.

The sealant film 10 according to an embodiment of the present invention is produced by cast film production in which the components are dry-blended, the resulting blend is fed into an extruder and melt-kneaded, the resulting melt-kneaded blend is co-extruded into a film form from a T-die, the extruded melt in a multilayer film form is brought into contact with a cooling roll and solidified, and the resulting solidified film is wound into a roll. Each component may be fed in the form of film-like crushed pieces, pellets, granules, or liquid. Here, the film-like crushed pieces may be film scraps generated in the process of carrying out an embodiment of the present invention. In inflation molding generally used for forming a sealant film, in which a bag-shaped film is extrusion-molded, a polyolefin-incompatible foreign substance if present would be likely to cause perforation or uneven thickness, and if the material is passed through a mesh filter with a fine mesh opening for the purpose of removing a foreign substance, the production rate would be significantly reduced. In contrast to that, cast film production easily obtains a high-quality film with no perforation and less uneven thickness and does not need to pass the material through a mesh filter with a fine opening, and thus can prevent a decrease in production rate.

### Laminate for Packaging

The sealant film 10 according to an embodiment of the present invention described above can be used in various applications by utilizing the good adhesiveness of the virgin polyolefin layers 1 and 3 present on both sides of the sealant film but in particular is most suitably used as a laminate for packaging used for making packaging containers.

FIG. 4 is a schematic cross-sectional side view illustrating a layer structure of a laminate 30 for packaging, the laminate including a substrate film 21 laminated on the polyolefin layer 1 not containing the recycled polyolefin in the sealant film 10, in which a functional layer 23 is formed between the substrate film 21 and the polyolefin layer 1 as necessary.

The substrate film 21 is provided to be positioned on the outer surface side of a packaging container. The material of the substrate film 21 is not particularly limited but is suitably a polyethylene resin, a polypropylene resin, a polyamide resin, a polyester resin, a poly(vinyl alcohol) resin, or the like in terms of achieving a suitable rigidity when the laminate 30 for packaging is used as a packaging container.

Examples of the polyethylene resin include a high-density polyethylene, a medium-density polyethylene, a low-density polyethylene, and a linear low-density polyethylene. Examples of the polypropylene resin include a homopolypropylene, a block polypropylene, and a random polypropylene. Examples of the polyamide resin can include nylon 6, nylon 6-6, nylon 6-10, nylon 11, nylon 12, nylon 13, nylon 6/nylon 6,6 copolymers, aromatic nylons (e.g., poly(meta-xylylene adipamide)), and amorphous nylons (e.g., nylon 6I/6T). In addition, examples of the polyester resin can include poly(ethylene terephthalate) (PET), poly(butylene terephthalate), and poly(ethylene naphthalate) (PEN). In terms of increasing the puncture resistance of a packaging bag, a polyamide film or a polyester film is suitable. In terms of enhancing gas barrier performance, a poly(vinyl alcohol)-based resin is suitable, and in particular, an ethylene-vinyl alcohol copolymer with an ethylene content of 20 to 50 mol% is suitable. Furthermore, the substrate film 21 may be stretched or may be laminated without stretching. Moreover, the material constituting the substrate film 21 may be derived from a petroleum raw material, a plant raw material, or a mixture of these. Still more, the substrate film 21 may contain a material-recycled material or a chemically recycled material.

The thickness of such a substrate film 21 is usually approximately from 5 to 50 µm.

In addition, representative examples of the functional layer 23 formed as necessary include an inorganic vapor-deposited layer and a printed layer.

The inorganic vapor-deposited layer is formed by plasma CVD or the like using aluminum, an aluminum compound, a silicon compound, or the like and is used to enhance gas barrier properties of a packaging bag or to conceal coloration due to the recycled polyolefin. Such an inorganic vapor-deposited layer is a thin layer with a thickness approximately of 0.001 to 1 µm. For the purpose of further enhancing the gas barrier performance, a cross-linking reaction coating film of a carboxylic acid and a metal or a coating film in which a metal oxide is dispersed may be contained on the thin layer.

In addition, the printed layer is formed by gravure printing, flexographic printing, offset printing, inkjet printing, or the like with inks of different colors and is for the purpose of decoration or the like. Particularly in the case of solid printing, the printed layer also has an action and a function of concealing coloration due to the recycled polyolefin.

Furthermore, combined use with the colored layer 7 in FIG. 3 can provide a more sophisticated and complicated decorative printed layer.

The thickness of such a printed layer is usually 10 µm or less.

Such a laminate 30 for packaging can also be produced by appropriately providing a functional layer, such as an inorganic vapor-deposited layer or a printed layer, on a surface of the substrate film 21, and then attaching the substrate film 21 (or the functional layer 23) to the polyolefin layer 1 in the sealant film 10 using a thermosetting adhesive, such as a urethane-based adhesive or an epoxy-based adhesive. Alternatively, the laminate 30 for packaging may be produced by attaching by extrusion coating using an adhesive resin.

### Packaging Container

FIG. 5 is a schematic cross-sectional side view illustrating an example of a layer structure of a packaging container 40 in which the laminate 30 for packaging is appropriately cut into appropriate sizes, and then the edges of the polyolefin layer 3 positioned on the inner surface side of FIG. 4 are adhered together by heat sealing.

The adhesion by heat sealing is carried out by a known means. For example, an empty pouch is made by three-side sealing using two pieces of the laminate 30, and the pouch is filled with contents from the opening. Finally, the opening is closed by heat sealing, and the packaging container (pouch) 40 filled with contents is obtained. Alternatively, an empty pouch can also be produced by making one piece of the laminate 30 into a cylindrical shape, heat-sealing the edges of the polyolefin layer 3 at two sides together to make the body portion of a pouch, and then making the bottom portion with a dedicated shape by heat sealing. Such a method is advantageous in increasing the volume of the pouch or providing a standing property.

Furthermore, the packaging container 40 is suitably produced using the laminate 30 for packaging according to an embodiment of the present invention dedicatedly in the body portion and using an ordinary sealant film formed from a virgin polyolefin dedicatedly in the bottom portion. The packaging container 40 thus obtained has the bottom portion with high strength and thus is particularly used as a standing pouch. In the standing pouch, a pouring opening may be three-dimensionally molded, or a spout may be attached as a pouring portion.

### Examples

The present invention will be described in detail with examples below. However, the present invention is not limited to the examples.

Each type of substrate films, sealant films, and adhesive in four types of laminate films 1 to 4 used as recycled polyolefins is shown in Table 1. PE, PA, PET, VM-PET, and LLDPE are abbreviations for polyethylene, polyamide, poly(ethylene terephthalate), aluminum-deposited poly(ethylene terephthalate), and linear low-density polyethylene, respectively.

**[Table 1]**

| Type of laminate film | Type of substrate film | Type of sealant film | Type of adhesive |
|---|---|---|---|
| Laminate film 1 | Stretched PE (thickness 25 µm) | LLDPE (thickness 80 µm) | Urethane-based adhesive for dry lamination |
| Laminate film 2 | Stretched PA (thickness 15 µm) | LLDPE (thickness 80 µm) | Urethane-based adhesive for dry lamination |
| Laminate film 3 | Stretched PET/stretched PA (thickness 12 µm/15 µm) | LLDPE (thickness 150 µm) | Urethane-based adhesive for dry lamination |
| Laminate film 4 | Stretched PET/VM-PET (thickness 12 µm/12 µm) | LLDPE (thickness 130 µm) | Urethane-based adhesive for dry lamination |

Each of the recovered laminate films 1 to 4 was flaked using a crusher (VC-360 available from Horai Co., Ltd.), then the flakes were extrusion-molded using a twin-screw extruder with granulation equipment (TEM-35B available from Toshiba Machine Co., Ltd.) under conditions of a barrel temperature of 240°C and a screw rotation speed of 200 rpm, the extruded strand was air-cooled and then pelletized, and pellets were obtained.

As a virgin polyolefin, polyethylenes mixed at a ratio of "linear low-density polyethylene (density: 0.915 g/cm³)/low-density polyethylene (density: 0.919 g/cm ³⁾" = 70/30 was used, and when the flake-derived pellets were fed into the twin-screw extruder, the recycled polyolefin was diluted as necessary.

The pellets were melt-kneaded using a single-screw extruder and a film forming machine equipped with a T-die (available from Toyo Seiki Seisaku-sho, Ltd.), extruded into a film form from the T-die and wound on a cooling roll at 60°C to form a film with a thickness of 90 µm, and polyolefin films containing a recycled polyolefin of Examples 1 to 4 and Comparative Examples 1 to 3 were obtained. Here, the resulting polyolefins were visually observed for a foreign substance using a microscope with a magnification of 20 times to confirm that there was no foreign substance having a maximum size larger than 2000 µm (2 mm).

For the polyolefin films of Examples 1 to 4 and Comparative Examples 1 to 3, the type of recycled polyolefin used, the dilution ratio using the virgin polyethylene, the type of foreign substance, the content of foreign substance and the like, and the presence or absence of perforation in the film are shown in Table 2. Here, the contents of the polyester, the polyamide, and the adhesive as foreign substances were calculated from the mixed ratio when the film was produced.

**[Table 2]**

| | Type of recycled polyolefin | Dilution factor using virgin PE | Type of foreign substance | PET content (mass%) | PA content (mass%) | Adhesive content (mass%) | Total content of foreign substance (mass%) | Presence or absence of perforation of film |
|---|---|---|---|---|---|---|---|---|
| Example 1 | Laminate film 1 | Not diluted | · PE-derived gel | 0 | 0 | 4 | 4 | Absence |
| | | | · Adhesive | | | | | |
| Example 2 | Laminate film 2 | 2 times | · PE-derived gel | 0 | 9 | 2 | 11 | Absence |
| | | | · PA | | | | | |
| | | | · Adhesive | | | | | |
| Example 3 | Laminate film 3 | 2 times | · PE-derived gel | 5 | 5 | 2 | 12 | Absence |
| | | | · PET | | | | | |
| | | | · PA | | | | | |
| | | | · Adhesive | | | | | |
| Example 4 | Laminate film 4 | 4 times | · PE-derived gel | 5 | 0 | 1 | 6 | Absence |
| | | | · PET | | | | | |
| | | | · Adhesive | | | | | |
| | | | · Aluminum | | | | | |
| Comparative Example 1 | Laminate film 2 | Not diluted | · PE-derived gel | 0 | 18 | 4 | 22 | Presence |
| | | | · PA | | | | | |
| | | | · Adhesive | | | | | |
| Comparative Example 2 | Laminate film 3 | Not diluted | · PE-derived gel | 10 | 10 | 4 | 24 | Presence |
| | | | · PET | | | | | |
| | | | · PA | | | | | |
| | | | · Adhesive | | | | | |
| Comparative Example 3 | Laminate film 4 | Not diluted | · PE-derived gel | 20 | 0 | 4 | 24 | Presence |
| | | | · PET | | | | | |
| | | | · Adhesive | | | | | |
| | | | . Aluminum | | | | | |

In the polyolefin films of Examples 1 to 4, poly(ethylene terephthalate) and/or polyamide, and an adhesive were used as foreign substances, the total content of the foreign substances was from 4 to 12 mass%, and perforation did not occur in the films. However, in the polyolefin films of Comparative Examples 1 to 3, the total content of the foreign substances was from 22 to 24 mass%, and perforation due to the foreign substances occurred in the film.

In the type of foreign substance in Table 2, polyethylene-derived gel and aluminum are described, but they were both in trace amounts of less than 0.5 mass%. Thus, they were judged not to have a large effect on the physical properties, such as perforation of the film, and their contents are not shown.

As Examples 5 to 8, sealant films composed of three layers (thickness 30 µm/90 µm/30 µm) were produced using the polyolefin film of Examples 1 to 4 as a polyolefin layer of an intermediate layer and a polyolefin film in which the virgin polyethylene was blended with 10 mass% of titanium oxide as layers on both sides of the polyolefin layer. The visible light transmittance (%) at 380 to 780 nm measured using an ultraviolet-visible-near infrared spectrophotometer (UV-3600 available from Shimadzu Corporation) was 24%, and no foreign substance was visually recognized inside each sealant film, confirming good appearance. It was also confirmed that a packaging container can be produced using each sealant film.

### Industrial Applicability

The packaging container obtained from the sealant film according to an embodiment of the present invention contains a large amount of recycled polyolefin and has excellent environmental compatibility. In addition, performance deterioration due to the recycled polyolefin is effectively avoided, and thus the packaging container is put to practical use as a packaging container containing a liquid or solid substance, particularly food, a liquid detergent, a shampoo, a conditioner, or the like. In particular, the packaging container is suitably used as a standing pouch for refill of shampoo, conditioner, or the like.

### Reference Signs List

1: Polyolefin layer not containing recycled polyolefin
3: Polyolefin layer not containing recycled polyolefin on opposite side of 5 from 1
5: Polyolefin layer containing recycled polyolefin
7: Colored layer
10: Sealant film
21: Substrate film
23: Functional layer
30: Laminate for packaging
40: Packaging container

## Claims

1. A sealant film comprising a polyolefin layer containing a recycled polyolefin, wherein the polyolefin layer containing the recycled polyolefin contains a polyolefin-incompatible foreign substance in an amount of 1 to 20 mass%, and the foreign substance has a maximum size of 1 to 2000 µm.

2. The sealant film according to claim 1, wherein the foreign substance is one or more selected from a gel derived from a recycled polyolefin, a polyester, a polyamide, an adhesive, and a colorant.

3. The sealant film according to claim 1 or 2, wherein polyolefin layers each not containing the recycled polyolefin are provided on both sides of the polyolefin layer containing the recycled polyolefin.

4. The sealant film according to claim 3, wherein the polyolefin layer containing the recycled polyolefin further contains a polyolefin-compatible virgin polyolefin.

5. The sealant film according to claim 3, wherein the recycled polyolefin is a recycled polyethylene, and the polyolefin layer is a polyethylene layer.

6. The sealant film according to claim 3, wherein at least one of the polyolefin layers each not containing the recycled polyolefin contains a colorant.

7. The sealant film according to claim 3, wherein the sealant film has a visible light transmittance of 90% or less.

8. A method for producing the sealant film described in claim 3, wherein the sealant film is formed by cast film production.

9. A laminate for packaging, the laminate comprising a substrate film laminated on either one of the polyolefin layers each not containing the recycled polyolefin of the sealant film described in claim 3.

10. A packaging container comprising the laminate for packaging described in claim 9.
